# EUROPEAN PATENT APPLICATION

(11) **EP 0 875 401 A2**
(43) Date of publication of application: **04.11.1998**
(21) Application number: 98830218.8
(22) Date of filing: 09.04.1998
(51) Int. Cl.: B60B 33/00

(54) **Easily assembled rotary supporting device for trolleys and the like**

(30) Priority: 29.04.1997 IT MI970993
(71) Applicant: Mazzoni, Ermenegildo, 28026 Omegna (Verbania) (IT)
(72) Inventor: Mazzoni, Ermenegildo, 28026 Omegna (Verbania) (IT)
(74) Representative: Cicogna, Franco

(57) **Abstract**

An easily assembled rotary supporting device for trolleys and the like comprises a plate, provided with a central sleeve (3), which can be upset toward an annular rim (10), pertaining to a wheel (12) supporting fork element (11), in which the upset portion of the sleeve define, in cooperation with a first portion of the annular rim (10), a seat for housing therein a first ball crown (20), whereas a second portion of the annular rim, cooperating with a rib of said plate, defines a seat for housing therein a second ball crown.

The upset portion of the plate (2) is provided with an extension turned toward the inside of the sleeve to form a bottom element fully covering the opening of said sleeve (3).

## Description

The present invention relates to an easily assembled rotary supporting device for trolleys and the like.

As known, the rotary supporting devices for trolleys conventionally comprise a fork element supporting a wheel.

The fork element is in turn rotatively engaged to a plate connected to the trolley.

This engagement is usually performed by rolling bearings arranged between the plate and the annular rim of the fork element.

The connection between said plate and fork element further provides to use a pin, fixed to said plate, and which can be engaged by bearings with the annular rim of the fork element.

The Italian Patent Application No. MI 19304 A/90, in the name of the same Applicant, discloses an easily assembled rotary supporting device for trolleys, which does not provide the use of a pin, with a consequent advantages from the economic and assembling standpoints.

More specifically, said Application discloses a rotary supporting device for trolleys, comprising a plate including a central sleeve which can be upset toward the annular rim defined by the wheel supporting fork element.

The upset portion of said sleeve provides a housing seat for housing thereon a first ball crown or assembly, in cooperation with a portion of the bottom edge of the annular rim.

A top portion of said annular rim defines a further seat for housing therein a second ball crown or assembly, in cooperation with an annular rib formed on the plate.

### SUMMARY OF THE INVENTION

Whereas the above disclosed prior supporting element has been found to satisfactorily operate, the need is anyhow felt to improve the impact and stress resistance capabilities of the mentioned prior rotary supporting device, to provide a rotary support adapted to bear high loads due to the trolley, while holding the assembling facility and making characteristics of the component elements of the supporting device.

Thus, the aim of the present invention is to provide a rotary supporting device for trolleys which is very reliable and safe in operation.

According to one aspect of the present invention, the above mentioned aim, as well as yet further objects, which will become more apparent hereinafter, have been achieved by an easily assembled rotary supporting device for trolley and the like, of the type comprising a plate, including a central sleeve, which can be upset toward an annular rim defined by a wheel supporting fork element, in which the outwardly upset portion of said sleeve defines, in cooperation with a first portion of the annular rim, a seat for housing therein a first ball assembly, whereas a second portion of said annular rim, in cooperation with a rib of said plate, defines a further seat for housing therein a second ball assembly, characterized in that said outwardly upset portion of said sleeve is extended by an extension element turned toward the inside of said sleeve.

Preferably the turned extension of said sleeve is provided with a planar region, adapted to form a bottom element fully covering the opening of said sleeve.

Moreover, the upset portion and the turned extension are preferably formed by plastically deforming an annular projecting portion provided on the bottom of the collet.

According to a preferred embodiment of the present invention, to the upset portion of said sleeve an annular contacting element thereon is engaged the first ball assembly or crown is coupled.

The rotary supporting device having the above disclosed construction provides the following advantages.

At first, the provision of the turned extension element of the upset portion will provide a greater loading resistance of said supporting device, since it will prevent the upset portion supporting the first ball assembly from being deformed under the trolley weight or load.

Moreover, said contact element, which can be coupled to the upset portion of said sleeve, will allow said first ball assembly to engage on a surface which can be machined to suitably reduce the friction, thereby improving the performance of the rotary supporting device.

In fact, the plastic deformation said sleeve is subjected to can generate a corrugated or not sufficiently smooth inner surface of the upset portion.

### BRIEF DESCRIPTION OF THE DRAWINGS

Further characteristics and advantages of the present invention will become more apparent hereinafter from the following disclosure, given by way of an illustrative but not limitative example, with reference to the accompanying drawings, where:
Figure 1 is a partial cross-sectional view illustrating the rotary supporting device according to the invention;
Figure 2 is a top plan view of the mentioned rotary supporting device;
Figure 3 is a further partial cross-sectional view illustrating another preferred embodiment of said rotary supporting device;
Figure 4 is yet another partial cross-sectional view illustrating yet another preferred embodiment of the subject rotary supporting device; and
Figure 5 is yet another cross-sectional view illustrating the starting configuration of the plate from which is formed, by a plastic deforming method, the plate of the supporting elements 3 and 4.

### DESCRIPTION OF THE PREFERRED EMBODIMENTS

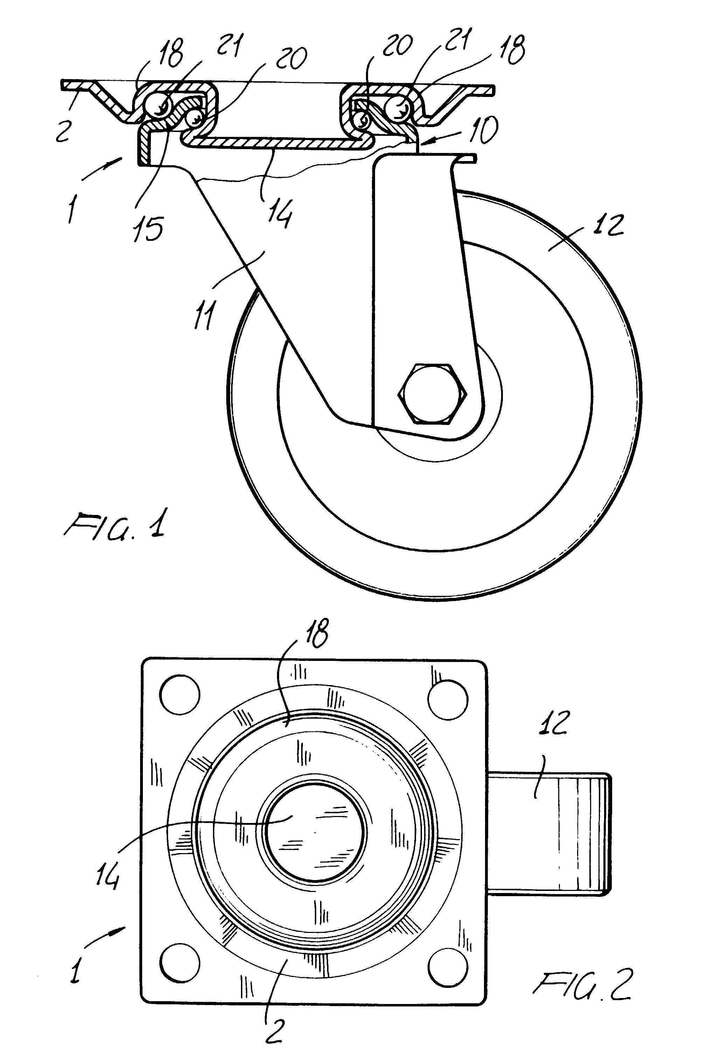

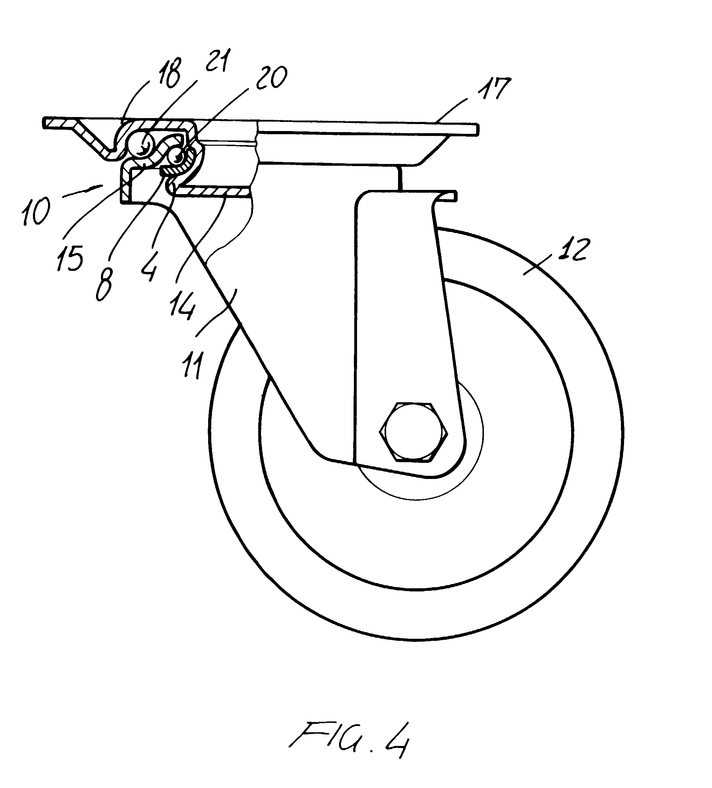

Figure 1 is a partial cross-sectional view illustrating the subject rotary supporting device, which has been generally indicated by the reference number 1.

The rotary supporting device 1 comprises a fork element 11, supporting a wheel 12.

The fork element 11 is provided with a suitably contoured annular rim 10.

The annular rim 10 comprises a recessed portion 15, defining a bottom portion as well as top portion of the annular rim 10.

The fork element 11 is connected, so as to be able of turning or revolving about its vertical axis, to a circular plate 2, the contour of which is adapted to provide an annular rib 18, a central sleeve 3 and a portion 4 outwardly upset of the sleeve 3.

The upset portion 4 cooperates with the bottom portion of the annular rim 10 to receive therein a first ball assembly 20.

The contour of the plate 2 further comprises a bottom element 14, defined by a turned extension element of the upset portion 4.

The bottom element 14 is adapted to fully cover the opening of the central sleeve 3.

The mentioned contour of the plate 2 is obtained by plastically deforming a plate element which, on the bottom of the central sleeve or collet 3, is provided with an annular projecting portion, which will be disclosed in a more detailed manner with reference to Figure 5, and which is deformed so as to assume the configuration defined by the upset portion 4 and the turned extension element 14.

Owing to the cooperation of the recess 15, pertaining to the annular rim 10, and of the rib 18 of the plate, a seat is defined for housing therein a second ball crown or assembly 21, thereby safely coupling the fork element 11 and plate 2.

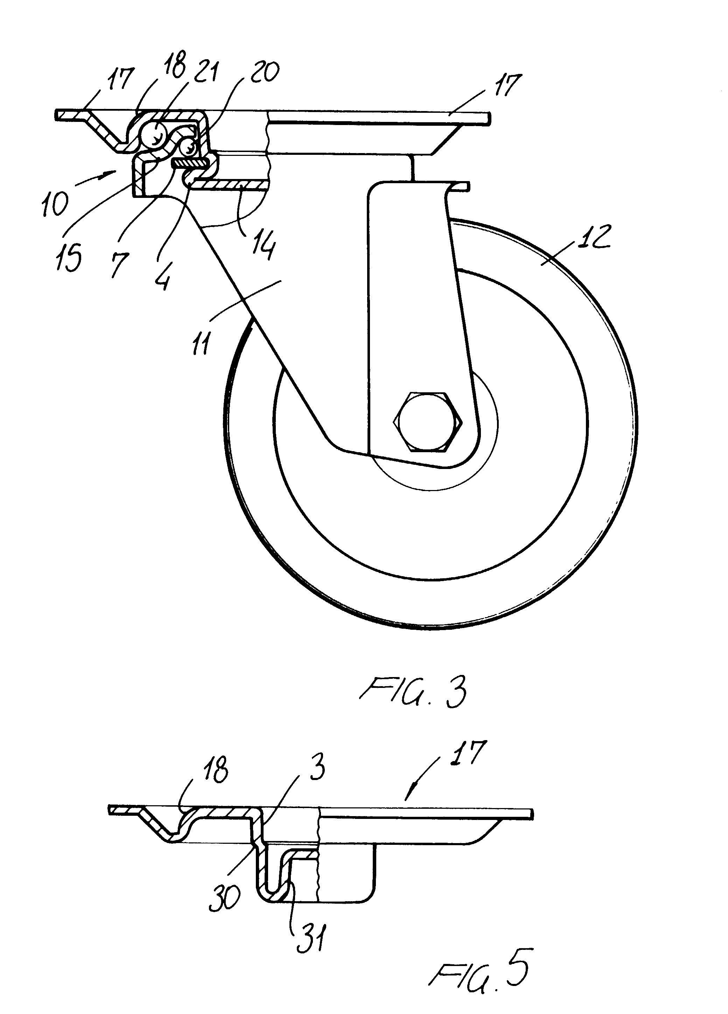

Figure 2 shows, from the top, the rotary supporting element 1 provided with the plate 2 on which the rib 18 is formed as well as the bottom element 14.

Figure 2 also partially shows the wheel 12.

Figure 3 is a partial cross-sectional view illustrating a modified embodiment of the supporting device according to the invention.

In this modified embodiment, a washer element 7, having an annular configuration, and coupled to the upset portion 4 is provided.

The washer element 7 supports the first ball assembly 20 and also operate to reinforce the support construction at the upset portion 4.

Figure 4 is a further partial cross-sectional view illustrating a further embodiment of the supporting device.

In this embodiment, in addition to said washer element 7, a collet 8, of annular configuration, coupled to the upset portion 4 is moreover provided.

Even in this case, the collet 8 supports a first ball assembly 20 and also operates, inter alia, to reinforce the support construction at the upset portion 4.

This embodiment, as well as that shown in Figure 3, preferably provide to use a plate 17, having a starting configuration, i.e. a configuration before the deforming operation, slightly different from the corresponding configuration of the plate 2.

Figure 5 is yet another partial cross-sectional view illustrating the configuration of the plate 17 before the plastic deforming thereof for providing the finished plate shown in Figures 3 and 4.

In particular, on the bottom of the collet 3 an annular projecting portion 31 is provided, which will be deformed so as to form the upset portion 4 and turned extension element 14.

The starting configuration of the plate 17 also provides a lead-in element 30 for holding in its position the washer element 7 or, alternately, the collet 8, during the plastic deformation of said plate.

In order to provide the final configuration of the plate 2 of the embodiment shown in Figure 1, it is possible to use a starting plate, not shown, fully analogous to that of Figure 5, but devoid of the lead-in element 30.

The provision of the bottom element 14, with the above mentioned turned extension element, will provide a rotary supporting device having a high impact and stress resistance, as well as a high load supporting capability.

In fact, said turned extension element will provide the supporting device with a greater loading resistance, since it will prevent any deformations under the load of said upset portion supporting the first ball assembly.

In this connection it should be apparent that it is not necessary to fully cover the opening of the sleeve 3 by a flat surface like that of the bottom element 14, in order to allow the supporting device to operate as disclosed, since said opening can be covered by a covering element including at least a small hole inside the opening of said sleeve.

Finally, in the embodiments shown in Figures 3 and 4, the further provision of a contact element 7 or 8, coupled to the upset portion 4 of the sleeve 3 will allow the first ball assembly 20 to engage on a preliminarily machined surface so as to reduce the friction, thereby improving the performance of the rotary supporting device.

In fact, the plastic deformation the sleeve is subjected to can provide a corrugated or not sufficiently smooth inner surface of the upset portion.

## Claims

1. An easily assembly rotary supporting device for trolleys and the like, of the type comprising a plate, including a central sleeve, which can be upset toward an annular rim, defined by a wheel supporting fork element, in which the outwardly upset portion of said sleeve defines, in cooperation with a first portion of said annular rim, a seat for housing therein a first ball assembly, whereas a second portion of said annular rim defines, in cooperation with a rib of said plate, a further housing seat for housing therein a second ball assembly, characterized in that said outwardly upset portion of said sleeve is extended by an extension element turned toward the inside of said sleeve.

2. A rotary supporting device according to Claim 1, characterized in that said turned extension element of said sleeve is provided with a planar portion adapted to provide a bottom element fully covering the opening of said sleeve.

3. A rotary supporting device, according to Claims 1 or 2, characterized in that said upset portion and turned extension element are formed by plastically deforming an annular projecting portion provided on the bottom of said sleeve.

4. A rotary supporting device, according to one or more of the preceding claims, characterized in that to said upset portion an annular contact element thereon said first ball assembly is engaged is coupled.

5. A rotary supporting device, according to Claim 4, characterized in that said annular contact element comprises a washer element.

6. A rotary supporting device, according to Claim 4, characterized in that said annular contact element comprises a collet element.

7. A rotary supporting device, according to one or more of Claims 4 to 6, characterized in that said plate is provided with a lead-in element for restraining at a set position said contact element as said annular projecting portion provided on said bottom of said sleeve is plastically deformed.
